# EUROPEAN PATENT APPLICATION

(11) **EP 2 175 408 A1**
(43) Date of publication of application: **14.04.2010**
(21) Application number: 08017388.3
(22) Date of filing: 02.10.2008
(51) Int. Cl.: G06Q 30/00

(54) **Sorting of lists of goods**

(71) Applicant: Vodafone Holding GmbH, 40213 Düsseldorf (DE)
(72) Inventor: Lee, Sabrina, 40219 Düsseldorf (DE); Hartl, Mike, 40878 Ratingen (DE)
(74) Representative: Ring & Weisbrodt

(57) **Abstract**

The present invention relates to a method for the at least partially automatized sorting of a user's (1) individual list (3, 7, 8, 9) of needed goods or goods to be procured from a retail trade, in particular comprising goods of daily and/or universal individual needs, which is **characterized in that** the goods on the list (3, 7, 8, 9) are sorted dependent on the placing position of the respective good in a goods selling unit (14) that offers the goods.

Another subject of the present invention is a terminal (2) to be operated in a mobile network (4), preferably according to a GSM, GPRS and/or UMTS radio network standard, which is designed and/or adapted for at least partially carrying out a method according to the invention.

Another subject of the present invention is a network node or a device in a mobile network (4), preferably according to a GSM, GPRS and/or UMTS radio network standard, which is designed and/or adapted for at least partially carrying out a method according to the invention

## Description

The present invention relates to a method for the at least partially automatized sorting of a user's individual list of needed goods or goods to be procured from a retail trade, in particular comprising goods of daily and/or universal individual needs.

The subject of the present invention is furthermore a terminal to be operated in a mobile network, preferably according to a GSM, GPRS and/or UMTS radio network standard, which is at least partially formed and/or adapted for carrying out a method according to the invention.

Furthermore, the subject of the present invention is a network node or a device in a mobile network, preferably according to a GSM, GPRS and/or UMTS radio network standard, which is at least partially designed and/or adapted for carrying out a method according to the invention.

For shopping needed goods or goods to be procured it is known to use a list - a so called shopping list -, on which the needed goods or goods to be procured are listed. Herein, the shopping list shall in particular assure that no needed goods or goods to be procured will be forgotten during the shopping. Usually, a corresponding shopping list is manually written on a paper or the like by a user who will take it along for shopping in the goods selling unit offering the corresponding goods, for example a supermarket or a retail store. During shopping, the user then has to look for the goods listed on the shopping list in the goods selling unit, i.e in particular with respect to the placing position of the goods chosen by the goods selling unit.

In the state of the art it is known to realize the shopping list in electronic form instead of paper form, ie. in form of a file by means of a mobile electronic device, in particular a mobile phone, a so called PDA (PDA: Personal Digital Assistant) or the like and then to use the shopping list file in the goods selling unit by means of the mobile electronic device. A corresponding functionality is for example known from KR 1020060115532 A and is actually for example offered in the internet by the homepage reachable under the address www.einkaufsliste-mobil.de.

In case of an electronic shopping list, a sorting of the goods listed on the shopping list can then be carried out, for example an alphabetic sorting of the goods or a type-specific sorting of the goods, i.e. for example a sorting of foodstuffs or detergents and/or such subgroups.

Since goods selling units are usually different both with respect to the offer of goods and with respect to the placing position of the goods chosen by the respective goods selling unit, time and success of the goods searching operation are different for the respective user. A high frustration potential is given here that has a negative effect on the shopping and/or the respective goods selling unit, in particular with users who are in a hurry and/or go to a goods selling unit that is unknown or less familiar to them.

Based upon this state of the art, it is the object of the invention to improve the sorting of goods on a list, in particular with respect to the respective goods searching operation of the user in a goods selling unit.

As technical solution, the invention proposes a method for the at least partially automatized sorting of a user's individual list of needed goods or goods to be procured from the retail shop, wherein the goods on the list are sorted dependent on the placing position of the respective goods in a goods selling unit that offers the goods.

The invention is based upon the knowledge that the consideration of the placing position of a good in a goods selling unit helps to improve the sorting of goods on a list, in particular with respect to the respective goods searching operation of the user.

An advantageous embodiment of the invention provides that on the base of the placing position of the respective good on the list in the goods selling unit offering the goods a walk point on a path or a route through the goods selling unit is determined and a sorting of the goods on the list is realised with respect to the path along the walk points of the respective goods on the list through the goods selling unit. Herein, advantageously a navigation through the goods selling unit along a route that passes the goods on the list is automatically realised according to the invention and thus the goods searching operation is simplified for the user.

Another advantageous embodiment of the invention is characterized by an optimization of the path or the route through the goods selling unit with respect to the distance, the length of time, conditions predetermined by the user, the user's preferences, conditions predetermined by the goods selling unit and/or conditions that are specific for the respective goods selling unit. Corresponding conditions predetermined by the user can be for example instructions with respect to the observation of special offers, alternative products, allergy information or similar criteria that can be predetermined or selected by the user. Furthermore, the user's preferences, for example the shopping behaviour and/or particular interests of the user can be considered, preferably in an automatised way, for which purpose corresponding preferences and associated behaviour are detected and evaluated, most preferably by means of a computer of a radio network. Furthermore, conditions predetermined by the goods selling unit, such as for example information regarding the entry or entry area, the cashier or cashier area or the like, can be included in the optimization. The same is true for conditions that are specific for the respective goods selling unit, for example special offers of certain products, so called "fast cashiers", availability and/or quantities of certain goods or suchlike conditions. Advantageously, the optimization can be adjusted, in particular by the user and/or the goods selling unit. Altogether, single ones and/or a combination of these optimization measures and/or options allow a further improvement of the sorting of the list of goods with respect to the goods searching operation.

An especially advantageous embodiment of the invention provides that the sorting of the list will be initiated automatically at and/or upon arrival at the goods selling unit. Thus, the shopping experience and the goods searching operation according to the invention is further improved for the user, in particular since the user does not have to become active himself for realising or initiating the sorting.

A concrete embodiment of the invention provides that a user's list (shopping list) of needed goods or goods to be procured from a retail store is held ready by a database of shopping lists (shopping list database), a list (list of placing positions of the goods) of the placing positions of the goods in the goods selling unit offering the goods is held ready in a database of goods selling units (goods selling units database) and the user makes use of a terminal to be operated in a mobile network, preferably a mobile network according to a GSM, GPRS and/or UMTS radio network standard, wherein after selection of the goods selling unit from the database of goods selling units (goods selling units database) the list (list of placing positions of the goods) of the placing positions of the goods in the goods selling unit offering the goods and the user's list (shopping list) of needed goods or goods to be procured from a retail store are transmitted to a sorting device, the goods on the list (shopping list) are sorted by the sorting device dependent on the placing position of the respective good on the list (list of placing positions of the goods) of the placing positions of the goods in the goods selling unit offering the goods and the sorted list of needed goods or goods to be procured from a retail store (sorted shopping list) is indicated to the user by means of a display device.

Advantageously, the path or the route along the walk points of the respective goods on the sorted list through the goods selling unit will be at least partially indicated by a display device, preferably together with the sorted list, most preferably in graphic form.

Hereby, a navigation according to the invention through the goods selling unit along a route that passes along the goods on the list can be further improved. It is especially advantageous to include photographic images of the goods and/or at least parts of the goods selling unit which further facilitate for the user to find the goods in the goods selling unit.

Advantageously, the goods selling unit will be automatically selected from the database of goods selling units (goods selling unit database) by the position in the mobile network of the user's terminal to be operated in the mobile network. The position of the terminal in the mobile network is advantageously determined using terminal based and/or network based localisation technologies. Furthermore, the position inside the goods selling unit can be determined by means of so called indoor positioning or indoor location systems, for example using WLAN and/or Bluetooth access points in the goods selling unit.

According to the invention, the goods selling unit can thus be automatically selected when the user is in the area of the corresponding goods selling unit or for example enters this one. Another embodiment of the invention provides that it is detected by the mobile network that the user is in an area of a goods selling unit, whereupon it is checked whether there is a list of needed goods or goods to be procured for the user (shopping list) and whether a corresponding list (list of placing positions of the goods) of the placing positions of the goods in the goods selling unit offering the goods is existent for the goods selling unit.

Another advantageous proposal of the invention provides that in case of the existence of a shopping list, goods selling units will be automatically proposed to the user which sell the corresponding goods, have them in stock, offer them, are in the proximity, are on the way and/or comply with suchlike criteria that can be selected and/or predetermined. Advantageously, such goods selling units are proposed to the user, which at least meet the corresponding criteria to a large extent. Furthermore, also several goods selling units can be proposed with an evaluation corresponding to the portion of the corresponding or met criteria. Advantageously, only such goods selling units are proposed that are memorized in the database of goods selling units (goods selling units database) and/or comprise an actualisation level to be predetermined with respect to the list (list of placing positions of goods) of the placing positions of the goods in the goods selling unit offering the goods.

Advantageously, the sorted list and/or the path (route) are indicated by means of a display device of the user's terminal to be operated in the mobile network. Thus, the user can advantageously use the display of his mobile phone as display device. Hereby, in particular the handling and/or manipulation of the terminal with respect to the application of the invention will be facilitated for the user, whereby the utilisation acceptance of the service according to the invention can be in particular increased.

According to another proposal of the invention, the database of shopping lists (shopping list data base), the database of goods selling units (goods selling units database) and/or the sorting device are realised and/or formed by a computing unit of the mobile network or by a computing unit reachable via the mobile network.

In another embodiment of the invention, the database of shopping lists (shopping list database) and/or the sorting device of is realised and/or memorized in a computing unit of the user's terminal to be operated in the mobile network. Herein, the list (list of placing position of the goods) of the placing positions of the goods of the goods selling unit offering the respective goods is advantageously transmitted to the user's terminal via the mobile network. The sorting and/or the indication of the list and/or the navigation is then advantageously realised by means of the terminal.

Furthermore, an embodiment is provided, in which the user's terminal transmits the sorting and/or the indication of the list and/or the navigation in particular to a display device located on a so called caddy cart of the goods selling unit. Advantageously, the transmission is realised via the mobile network by means of a message service of the mobile network or via a connection in the close or short distance radio service by means of WLAN and/or Bluetooth, for which purpose the user's terminal as well as the display device on the caddy cart have a corresponding interface.

Another embodiment of the invention is **characterized in that** the list (list of placing positions of the goods) of the placing positions of the goods of the goods selling unit offering the goods (supermarket), the user's list (shopping list) of needed goods or goods to be procured from the retail store and/or the user's sorted list (sorted shopping list) of needed goods or goods to be procured from the retail store are transmitted by means of a message service of the mobile network, preferably by means of SMS or MMS.

For the technical solution of the initially mentioned problem, the present invention further proposes a terminal to be operated in a mobile network, preferably a mobile network according to a GSM, GPRS and/or UMTS radio network standard, which takes at least partially part in an at least partially automatized sorting of a user's individual list (shopping list) of needed goods or goods to be procured from a retail store, and which is **characterized in that** it is designed and/or adapted for at least partially carrying out a method according to the invention.

Another subject of the present invention is a network node or a device in a mobile network, preferably a mobile network according to a GSM, GPRS and/or UMTS radio network standard, which takes at least partially part in an at least partially automatized sorting of a user's individual list (shopping list) of needed goods or goods to be procured from a retail store and which is **characterized in that** it is designed and/or adapted for at least partially carrying out a method according to the invention.

Further properties, characteristics and advantages of the invention will be explained in detail in the following by means of the exemplary embodiments represented in the figures of the drawing. Herein:
- Fig. 1: shows a schematic diagram of an exemplary embodiment of the collection of shopping lists or lists of placing positions of goods of a sorting of goods according to the invention;
- Fig. 2: shows a schematic diagram of an exemplary embodiment of a sorting of goods according to the invention.

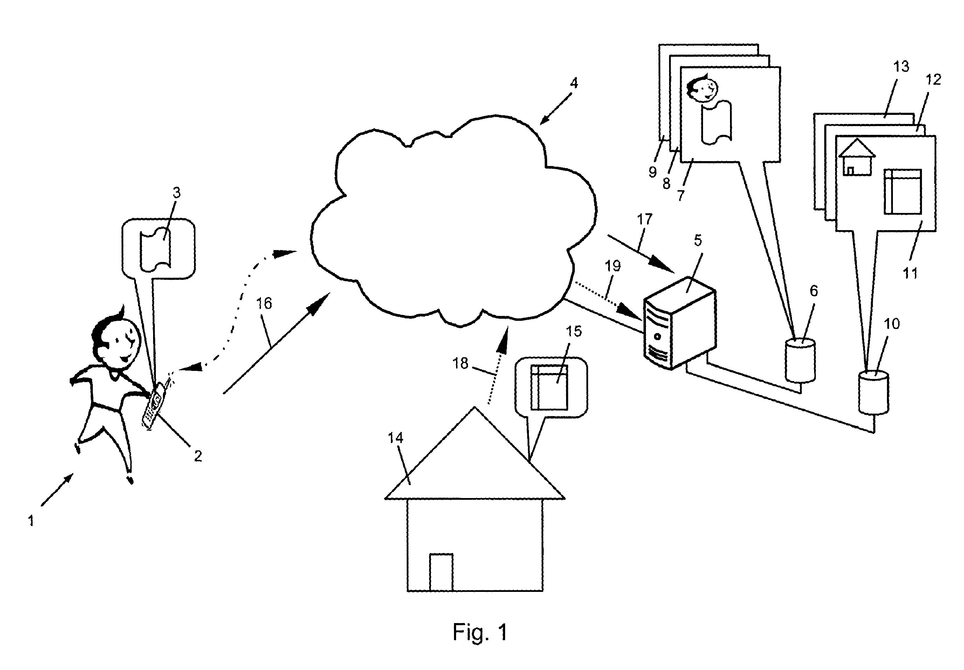

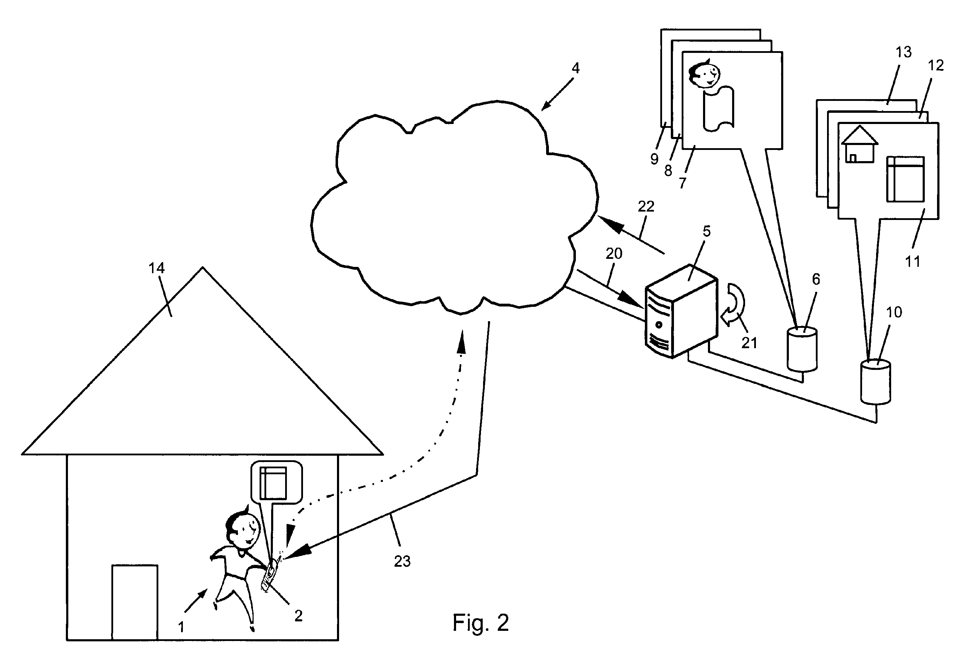

Fig. 1 and fig. 2 show an exemplary embodiment on principle of an at least partially automated sorting according to the invention of a user's 1 individual list 3 - also called shopping list 3 in the following - of needed goods or goods to be procured from a retail store, in particular comprising goods of the daily and/or universal individual needs.

In the present case, the user 1 has a mobile terminal 2 to be operated in a mobile network 4 according to a GSM, GPRS and/or UMTS radio network standard. The operation of the terminal 2 in the mobile network 4 is symbolically represented in fig. 1 and fig. 2 by the dash-dotted double arrow between the terminal 2 and the mobile network 4. The user's 1 mobile terminal 2 that has the form of a mobile phone 2 in the present case uses a subscriber identification module, a so called SIM, in the present case for getting an access to the mobile network, which module is usually placed in the mobile terminal 2 in a replaceable manner. The subscriber identification module (SIM) comprises an unequivocal identification, here the so called MSISDN and/or the so called IMSI, which is allocated to the user 1 by the mobile network 4.

The user's 1 shopping list 3 is memorized in the user's 1 mobile phone 2. Herein, the shopping list 3 can be memorized by voice and/or text entry into the terminal 2. In case of a voice entry, the voice will be advantageously automatically converted into a text (voice to text translation). The shopping list 3 can also be entered by the terminal, wherein the shopping list 3 is directly memorized by a database 6 during the entry via the mobile network 4. Furthermore, the shopping list 3 can also be memorized as a file by the terminal, for example by means of a transmission from a computing unit to the terminal 2.

In fig. 1 and fig. 2 the mobile network is symbolically represented by a cloud. The mobile network 4 comprises different devices and/or systems that form or realise the mobile network 4 and that are symbolically represented in fig. 1 and fig. 2 by a computing unit 5 and databases 6 and 10. The mobile network 4 provides a computing unit (server) 5 that collects and/or manages shopping lists 7, 8, 9 of users, i.e. individual lists of needed goods or goods to be procured of the respective users, in a database 6 and lists of placing positions of goods 11, 12, 13 of goods selling units, i.e. lists of placing positions of goods of goods selling units offering goods in a database 10. Herein, database 6 provides an allocation between the respective shopping list of a user and the unequivocal identification allocated to the respective user by the mobile network 4, in the present case the so called MSISDN and/or the so called IMSI. Herein, database 10 provides an allocation between the respective list of placing positions of goods of a goods selling unit and the geographic position of the goods selling unit, which is in the present case preferably determined by and/or referring in an allocating manner to the respective radio cells or the respective radio cell areas in the mobile network 4.

The lists of placing positions of goods 11, 12, 13 in the database 10 are created or provided by the respective goods selling units for realising the service according to the invention and are transmitted to the database 10. Herein, the transmission can be realised via the mobile network 4 or via for example an internet connection between the computing unit 5 and a corresponding computing unit of the goods selling unit (not explicitly represented here). In the exemplary embodiment represented in fig. 1 and fig. 2, a goods selling unit 14, here a supermarket 14, transmitted the list of placing positions of goods 15 via the mobile network 4 to the computing unit 5 of the mobile network 4 and memorized it in the database 10 (in fig. 1 symbolically represented by the arrows referenced by the reference numerals 18 and 19). The lists of placing positions of goods 11, 12, 13 in the database 10 can be advantageously provided and/or connected with other information by the respective goods selling units, in particular with preconditions of the goods selling unit and/or conditions that are specific of the goods selling unit, such as for example special offers or the like. For this, the lists of placing positions of goods 11, 12, 13 can be administrated by the goods selling units, in particular for actualisation. Advantageously, the lists of placing positions of goods are automatically actualised by the respective goods selling units, for example automatically when goods are placed at different points or change their position in the goods selling unit. Furthermore, an automatic actualisation with respect to the actual stock or stock to be expected can advantageously be realised.

In the exemplary embodiment represented in fig. 1 and fig. 2, the user gradually collects the needed goods or goods to be procured during the day and writes them on his shopping list 3. In the present case, the mobile network 4 offers a service for this realised by the computing unit 5, which service in particular comprises the memorisation of the shopping list 3 in the database 6. Herein, the user's 1 terminal 2 advantageously carries out an application by means of an application program, which realises the memorisation of goods on the user's 1 shopping list 3 in the terminal 2 and the transmission (in fig. 1 symbolically represented by the arrow referenced by the reference numeral 16) of the memorized goods of the shopping list 3 to the mobile network 4. In the context of the transmission 16 to the mobile network 4, the entries are provided with the unequivocal identification (MSISDN and/or IMSI) allocated to the user 1 by the mobile network 4. On the base of the unequivocal identification (MSISDN and/or IMSI) the mobile network 4, i.e. at least the computing unit 5 allocates the goods of the shopping list 3 of the user 1 to a corresponding shopping list 7 in the database 6.

The mobile network 4 detects the user's 1 local position, in the present case automatically by means of the local position of the user's 1 terminal 2 in the mobile network 4. Here, the local position is determined by detecting the respective radio cell or the respective radio cell area of the mobile network 4, in which the user 1 or his terminal 2 is located or by means of a corresponding device for determining the geographical position, in particular a GPS device, which is integrated in or connected to the terminal. The information of the local position is collected by the mobile network 4, in particular within the scope of the so called mobility management with respect to the terminal 2 (in fig. 1 and fig. 2 symbolically represented by the dash-dotted double arrow between the terminal 2 and the mobile network 4).

If the user 1 is located in the area of the goods selling unit 14, a sorting of the goods according to the invention will be initiated by the mobile network (in fig. 2 symbolically represented by the arrow referenced by the reference numeral 20). Herein, the computing unit 5 queries a shopping list 7 of the user 1 in the database 6 using the unequivocal identification (MSISDN and/or IMSI) of the user 1. If a shopping list 7 of the user 1 is existent in the database 6, the computing unit 5, while using the information of the local position of the user 1, fetches the list of placing positions of goods 11 of the goods selling unit 14 correspondingly located in the area of the local position, which list is deposited in the database 10 with respect to the local position. Afterwards, the goods on the user's shopping list 7 will be sorted by the computing unit 5 dependent on the placing position of the respective good in the goods selling unit 14.

Herein, the goods of the shopping list are sorted such that on the base of the placing position of the respective good of the shopping list in the goods selling unit 14 a walk point of a path or a route through the goods selling unit 14 will be determined and the goods of the list will be sorted with respect to a path or a route along the walk points of the respective goods on the shopping list through the goods selling unit 14. The query of the databases 6 and 10 and the sorting are symbolically represented by the arrow referenced by the reference numeral 21 in fig. 2. Then, the sorted shopping list will be transmitted, together with the walk information (route) and sometimes provided with other information concerning the goods, from the computing unit 5 via the mobile network 4 to the user's 1 terminal 2 (in fig. 2 symbolically represented by the arrows referenced by the reference numerals 22 and 23) and will be optically and/or acoustically indicated by a display device of the mobile terminal 2, in the present case in particular by means of MMS.

The exemplary embodiments of the invention that have been represented in the figures of the drawing and haven been described in connection with these ones only serve as explanation of the invention and are not limiting for this one.

### List of reference numerals:

- 1: user
- 2: terminal (mobile phone (user (1))
- 3: list
- 4: individual list of needed goods or goods to be procured from the retail store/shopping list (user (1))
- 5: computing device/sorting device
- 6: database/shopping list database
- 7: shopping list (database (6))
- 8: shopping list (database (6))
- 9: shopping list (database (6))
- 10: database/goods selling units database
- 11: list of placing positions of goods (database (10))
- 12: list of placing positions of goods (database (10))
- 13: list of placing positions of goods (database (10))
- 14: goods selling unit/supermarket
- 15: list of the placing positions of goods of the goods selling unit offering the goods (14)/list of placing positions of goods (goods selling unit (14))
- 16: transmission/generation shopping list (3)
- 17: transmission/generation shopping list (3)
- 18: transmission of list of placing positions of goods (15)
- 19: transmission of list of placing positions of goods (15)
- 20: initiation of sorting of shopping list
- 21: sorting of shopping list
- 22: transmission of sorted shopping list/list of placing positions of goods
- 23: indication of sorted shopping list/list of placing positions of goods

## Claims

1. A method for the at least partially automatized sorting of a user's (1) individual list (3, 7, 8, 9) of needed goods or goods to be procured from a retail trade, in particular comprising goods of daily and/or universal individual needs,
**characterized in that**
the goods on the list (3, 7, 8, 9)
are sorted dependent on the placing position of the respective good in a goods selling unit (14) that offers the goods.

2. A method according to claim 1, **characterized in that** on the base of the placing position of the respective good on the list (3, 7, 8, 9) in the goods selling unit (14) offering the goods a walk point on a path (route) through the goods selling unit (14) is determined and a sorting of the goods on the list (3, 7, 8, 9) is realised with respect to a path along the walk points of the respective goods on the list (3, 7, 8, 9) through the goods selling unit (14).

3. A method according to claim 2, **characterized by** an optimization of the path (route) through the goods selling unit (14) with respect to the distance, the length of time, conditions predetermined by the user(1) , the user's preferences, conditions predetermined by the goods selling unit (14) and/or conditions that are specific for the respective goods selling unit.

4. A method according to claim 3, **characterized in that** the optimization can be adjusted.

5. A method according to one of the claims 1 through 4, **characterized in that** the sorting of the list (3, 7, 8, 9) will be initiated at and/or upon arrival at the goods selling unit (14).

6. A method according to one of the claims 1 through 5, **characterized in that** a user's list (3, 7, 8, 9) of needed goods or goods to be procured from a retail store is held ready by a database (6) of shopping lists (7, 8, 9), a list (11, 12, 13) of the placing positions of the goods in the goods selling unit (14) offering the goods is held ready in a database (10) of goods selling units (14) and the user (1) makes use of a terminal (2) to be operated in a mobile network (4), wherein after selection of the goods selling unit (14) from the database (10) of goods selling units (14) the list (11, 12, 13) of the placing positions of the goods in the goods selling unit (14) offering the goods and the user's (1) list (7, 8, 9) of needed goods or goods to be procured from a retail store are transmitted to a sorting device (5), the goods on the list (7, 8, 9) are sorted by the sorting device (5) dependent on the placing position of the respective good on the list (11, 12, 13) of the placing positions of the goods in the goods selling unit (14) offering the goods and the sorted list of needed goods or goods to be procured from a retail store (sorted shopping list) is indicated by means of a display device.

7. A method according to claim 6, **characterized in that** the path (route) along the walk points of the respective goods on the sorted list through the goods selling unit (14) will be at least partially indicated by a display device, preferably together with the sorted list, most preferably in graphic form.

8. A method according to claim 6 or claim 7, **characterized in that** the goods selling unit (14) will be automatically selected from the database (10) of goods selling units (14) by the local position in the mobile network (4) of the user's (1) terminal (2) to be operated in the mobile network (4).

9. A method according to claim 8, **characterized in that** the local position of the terminal (2) in the mobile network (4) is determined using terminal based and/or network based localisation technologies.

10. A method according to one f the claims 6 through 9, **characterized in that** the sorted list and/or the path (route) is indicated by a display device of the user's (1) terminal (2) to be operated in the mobile network (4).

11. A method according to one of the claims 6 through 10, **characterized in that** the database (6) of shopping lists (7, 8, 9), the database (10) of goods selling units (14) and/or the sorting device (5) are realised and/or formed by a computing unit (5) of the mobile network (4) or by a computing unit reachable via the mobile network (4).

12. A method according to one of the claims 6 through 11, **characterized in that** the list (11, 12, 13) of the placing positions of the goods of the goods selling unit (14) offering the goods, the user's (1) list (7, 8, 9) of needed goods or goods to be procured from the retail store and/or the user's (1) sorted list (sorted shopping list) of needed goods or goods to be procured from a retail store are transmitted by means of a message service of the mobile network (4), preferably by means of SMS or MMS.

13. A terminal (2) to be operated in a mobile network (4), preferably a mobile network (4) according to a GSM, GPRS and/or UMTS radio network standard, which takes at least partially part in an at least partially automatized sorting of a user's (1) individual list (3, 7, 8, 9) of needed goods or goods to be procured from a retail store, **characterized in that** it is designed and/or adapted for at least partially carrying out a method according to one of the claims 1 through 12.

14. A network node in a mobile network (4), preferably a mobile network (4) according to a GSM, GPRS and/or UMTS radio network standard, which takes at least partially part in an at least partially automatized sorting of a user's (1) individual list (3, 7, 8, 9) of needed goods or goods to be procured from a retail store, **characterized in that** it is designed and/or adapted for at least partially carrying out a method according to one of the claims 1 through 12.
